# EUROPÄISCHE PATENTANMELDUNG

(11) **EP 1 170 682 A1**
(43) Veröffentlichungstag der Anmeldung: **09.01.2002**
(21) Anmeldenummer: 00114250.4
(22) Anmeldetag: 03.07.2000
(51) Int. Cl.: G06F 17/60

(54) **Bereitstellen einer virtuellen Benutzersitzung**

(71) Anmelder: Gigabell AG, 60325 Frankfurt/Main (DE)
(72) Erfinder: Zawrel, Rudolf alias Daniel David, D-60435 Frankfurt/Main (DE)
(74) Vertreter: Dendorfer, Claus, Dr.

(57) **Zusammenfassung**

Ein Verfahren zum Bereitstellen einer virtuellen Benutzersitzung zwischen einem Server (10) und einem Benutzerrechner (12) über ein Kommunikationsnetzwerk (14) weist die Schritte auf, die Benutzersitzung aufzubauen (68), Präsentationsdaten von dem Server (10) an den Benutzerrechner (12) zu übertragen (72), die Präsentationsdaten durch den Benutzerrechner (12) anzuzeigen (74), eine manipulationsgeschützte Kontrolle (78-84) durchzuführen, ob die Anzeige (74) der Präsentationsdaten durch den Benutzerrechner (12) stattgefunden hat, und die Benutzersitzung zu beenden (90), falls bei der Kontrolle (78-84) festgestellt wurde, daß eine Manipulation erfolgt ist oder daß die Anzeige (74) der Präsentationsdaten durch den Benutzerrechner (12) nicht stattgefunden hat. Eine Vorrichtung und ein Computerprogrammprodukt weisen entsprechende Merkmale auf. Durch die Erfindung werden die technischen Voraussetzungen geschaffen, um einen werbefinanzierten Zugang zu einem Datenkommunikationsnetzwerk mit einer Sicherheit und Zuverlässigkeit bereitzustellen, die für einen hohen Werbefinanzierungsgrad erforderlich sind.

## Beschreibung

Die Erfindung betrifft allgemein das technische Gebiet der Datenkommunikationsnetzwerke und spezieller das Gebiet, über ein solches Kommunikationsnetzwerk eine virtuelle Benutzersitzung zwischen einem Server und einem Benutzerrechner bereitzustellen. Insbesondere soll es sich dabei um eine Benutzersitzung handeln, die im weitesten Sinne manipulationsgeschützt ist und sich somit zur Auswertung in abrechnungstechnischer Hinsicht eignet. Als Kommunikationsnetzwerk ist vorzugsweise das Internet vorgesehen.

Es ist bekannt, Internetzugänge mit den verschiedensten Gebührenmodellen bereitzustellen. Im Low-Cost-Bereich sind in diesem Zusammenhang insbesondere Angebote bekannt, die ganz oder zum Teil durch Werbeeinnahmen finanziert werden. Ein Beispiel für die technische Ausgestaltung eines derartigen Angebots mit Werbemaßnahmen ist in der EP 0 822 536 A2 beschrieben.

Generelles Merkmal der Werbefinanzierung ist es, daß dem Benutzer im Austausch für einen kostenreduzierten oder kostenlosen Internetzugang Werbeinformationen angezeigt werden. Damit der Anbieter des Internetzugangs die erforderlichen Werbeeinnahmen erzielen kann, muß er den Werbetreibenden glaubhaft vermitteln, daß die Werbeinformationen tatsächlich den Benutzer erreichen. Naturgemäß ist dieser Aspekt um so wichtiger und kritischer, je höher der Anteil der Werbefinanzierung des Internetangebots ist. Überdies steigt der Anreiz für Manipulationen oder sonstigen Mißbrauch ebenfalls mit dem Grad, in dem wegen der Werbefinanzierung ein ungerechtfertigter Vorteil erzielbar ist. Daher ist die Mißbrauchssicherheit ein Kriterium, dem mit zunehmendem Werbefinanzierungsanteil weit überproportionale Bedeutung zukommt.

Die Erfindung hat demgemäß die Aufgabe, eine Möglichkeit aufzuzeigen, um einen werbefinanzierten Zugang zu einem Datenkommunikationsnetzwerk mit einer Sicherheit und Zuverlässigkeit bereitzustellen, die für einen hohen Werbefinanzierungsgrad erforderlich sind.

Erfindungsgemäß wird diese Aufgabe durch ein Verfahren mit den Merkmalen des Anspruchs 1, eine Vorrichtung mit den Merkmalen des Anspruchs 15 und ein Computerprogrammprodukt mit den Merkmalen des Anspruchs 16 gelöst. Die abhängigen Ansprüche betreffen bevorzugte Ausgestaltungen der Erfindung.

Die Erfindung beruht auf der Grundidee, eine virtuelle Benutzersitzung bereitzustellen, in der Präsentationsdaten (z.B. Werbeinformationen) dem Benutzer angezeigt werden und in der zusätzlich eine manipulationsgeschützte Kontrolle erfolgt, ob die Anzeige der Präsentationsdaten stattgefunden hat. Die Benutzersitzung wird beendet, falls bei dieser Kontrolle eine Manipulation festgestellt wird, oder falls festgestellt wird, daß die Präsentationsdaten aus irgendwelchen Gründen nicht angezeigt worden sind. Das Bestehen der Benutzersitzung kann beispielsweise mit einer Vergütungszahlung oder Subventionierung eines Internet-zugangs verknüpft sein.

Durch das erfindungsgemäße Merkmal, die tatsächliche Anzeige der Präsentationsdaten manipulationsgeschützt zu kontrollieren, wird ein erhöhtes Maß an Sicherheit und Zuverlässigkeit erreicht. Damit eignet sich die Erfindung auch für hochgradig werbesubventionierte Angebote, beispielsweise für Angebote, bei denen der Benutzer weder Kosten für den eigentlichen Internetzugang noch Telefonkosten für die Einwahl aufzubringen hat. Die Erfindung stellt somit die technischen Grundlagen für derartige Zugangsdienste bereit.

Die Reihenfolge der in den Ansprüchen genannten Schritte soll keine Beschränkung des Schutzbereichs bedeuten. Es sind vielmehr Ausgestaltungen der Erfindung vorgesehen, in denen diese Schritte in anderer Reihenfolge oder ganz oder teilweise parallel oder ineinander verzahnt (quasi-parallel) ausgeführt werden. Insbesondere werden in bevorzugten Ausgestaltungen die Präsentationsdaten, die in einer Benutzersitzung angezeigt werden, bereits vor Beginn dieser Benutzersitzung (z.B. in einer früheren Benutzersitzung oder bei der Installation) zum Benutzerrechner übertragen. Die so übertragenen Daten können z.B. in einer Präsentationsdatei des Benutzerrechners zur Verwendung in einer zukünftigen Benutzersitzung gespeichert werden.

Vorzugsweise wird die manipulationsgeschützte Kontrolle, ob die Anzeige der Präsentationsdaten durch den Benutzerrechner stattgefunden hat, zumindest auch durch den Server durchgeführt, und entsprechend ist auch das Beenden oder der Abbruch der Benutzersitzung zumindest auch durch den Server auslösbar. Diese serverseitige Kontrolle stellt schon einen erheblichen Sicherheitsgewinn und Manipulationsschutz dar. Besonders bevorzugt sind jedoch Ausgestaltungen, bei denen zusätzlich eine Kontrolle auf seiten des Benutzerrechners stattfindet und bei denen ein auf diesem Rechner laufendes Benutzerprogramm ebenfalls ein Beenden der Benutzersitzung initiiert, wenn eine Kontrolle auf eine Manipulation oder eine Fehlfunktion hinweist. Zur serverseitigen Kontrolle erfolgt bevorzugt eine das Anzeigen der Präsentationsdaten betreffende Rückmeldung von dem Benutzerrechner an den Server. In bevorzugten Ausgestaltungen finden ferner bei jedem Einbuchvorgang ("login") eine Berechtigungsprüfung und vorzugsweise weitere Kontrollen statt.

Besonders hohe Aufmerksamkeitswerte bei den Benutzern (und damit besonders gute Werbemöglichkeiten) werden erzielt, wenn die Präsentationsdaten Videoclips umfassen. Solche Videoclips können beispielsweise in einem Videobereich auf dem Bildschirm des Benutzerrechners angezeigt werden. Im Zusammenhang mit der serverseitigen Kontrolle ist es dabei besonders vorteilhaft, wenn sowohl der Beginn der Anzeige eines Videoclips als auch das Ende der Anzeige des Videoclips von dem Benutzerrechner an den Server rückgemeldet wird. Auf Seiten des Servers kann dann auch der zeitliche Abstand des Eintreffens dieser Rückmeldungen ausgewertet und mit der Laufdauer des Videoclips verglichen werden. Diese Maßnahme erhöht die Manipulationssicherheit noch weiter, weil eine veränderte Benutzeranwendung nicht nur hinsichtlich des Dateninhalts der Rückmeldungen, sondern auch hinsichtlich des Zeitverhaltens die tatsächlich vorgesehene Benutzeranwendung nachahmen müßte.

Eine besonders hohe Sicherheit wird erzielt, wenn die Anzeige von Videodaten anhand des tatsächlichen Bildschirminhalts in einem Video-Anzeigebereich überprüft wird. Beispielsweise kann festgestellt werden, ob sich der Dateninhalt in einem entsprechenden Bildspeicher des Benutzerrechners während der Videoanzeige ändert. Eine andere Möglichkeit der Kontrolle, die in bevorzugten Ausgestaltungen der Erfindung eingesetzt wird, ist ein Frage- und Antwortspiel zwischen dem Benutzerrechner und dem Server. In bevorzugten Ausgestaltungen ist auch vorgesehen, den Benutzer in dieses Spiel mit einzubeziehen, um somit die tatsächliche Sichtbarkeit der Werbeinhalte und deren Wahrnehmung durch den Benutzer sicherzustellen.

In bevorzugten Ausgestaltungen erfolgt ferner eine Kontrolle dadurch, daß Zeit-und/oder Kontostandsdaten auf beiden Seiten berechnet und regelmäßig miteinander verglichen werden. Ferner ist es zur Vermeidung von Manipulationsversuchen vorteilhaft, wenn die Konfiguration des Benutzerrechners (z.B. der verwendete TCP/IP-Port) durch eine Anforderung des Servers veränderbar ist.

Wenn in Zusammenhang mit der Erfindung ein kostenloser Internet-Zugang angeboten wird, dann wird dieser vorzugsweise vor dem Beginn der Benutzersitzung aufgebaut und entsprechend mit dem Beenden der virtuellen Benutzersitzung ebenfalls beendet. Es kann vorgesehen sein, daß der Benutzer während der Zeitdauer der Benutzersitzung mittels eines üblichen Browsers auf den Internet-Zugang zugreifen kann. Insbesondere im Zusammenhang mit umfangreichen Präsentationsdaten (z.B. Videodaten) ist es vorzugsweise vorgesehen, diese Daten nur dann zum Benutzerrechner zu übertragen, wenn die Übertragungskapazität des Internet-Zugangs vom Benutzer nicht voll in Anspruch genommen wird.

Bevorzugte Ausgestaltungen der erfindungsgemäßen Vorrichtung sowie des erfindungsgemäßen computerlesbaren Datenträgers sind mit Merkmalen weitergebildet, die den gerade beschriebenen und/oder den in den abhängigen Verfahrensansprüchen genannten Merkmalen entsprechen.

Weitere Merkmale, Vorteile und Aufgaben der Erfindung gehen aus der folgenden detaillierten Beschreibung von Ausführungsbeispielen hervor. Es wird auf die schematischen Zeichnungen verwiesen, in denen:
Fig. 1 ein Blockdiagramm eines Systems nach einem Ausführungsbeispiel der Erfindung darstellt,
Fig. 2 einen in Zusammenhang mit der Erfindung verwendeten Benutzerrechner zeigt,
Fig. 3 ein Beispiel für den Aufbau eines Portalfensters zeigt,
Fig. 4 einen erfindungsgemäßen Beispielablauf überblicksartig darstellt,
Fig. 5 die mit dem Aufbau der Benutzersitzung zusammenhängenden Schritte genauer darstellt,
Fig. 6a und Fig. 6b zwei beispielhafte Abläufe des Trennens der Benutzersitzung darstellen,
Fig. 7a bis Fig. 7c drei beispielhafte Abläufe der Kontrolle durch einen Austausch von Frage und Antwort zeigen,
Fig. 8 einen beispielhaften Ablauf einer Kontostandskontrolle darstellt, und
Fig. 9 einen beispielhaften Ablauf des Austauschs von Konfigurationsdaten zeigt.

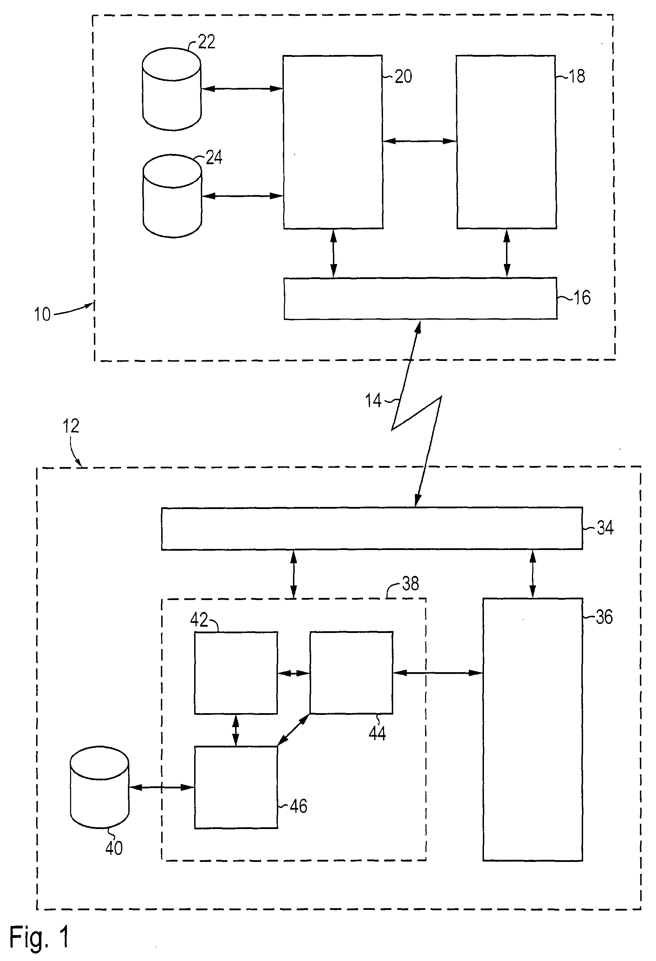

Das in Fig. 1 schematisch dargestellte System weist einen Server 10 und einen Benutzerrechner 12 auf, die über ein Kommunikationsnetzwerk 14, beispielsweise das Internet, Daten auszutauschen vermögen.

Der Server 10 ist ein leistungsfähiges Rechnersystem auf der Basis eines oder mehrerer Computer. Konzeptuell sind im Zusammenhang mit der vorliegenden Erfindung als Funktionsgruppen des Servers 10 ein Kommunikationsmodul 16, ein Steuermodul 18, ein Datenzugriffsmodul 20, eine Profildatenbank 22 und eine Präsentationsdatenbank 24 zu nennen. Die drei Module 16, 18, 20 stehen untereinander in Verbindung. Das Kommunikationsmodul 16 stellt allgemeine Funktionen zum Datenaustausch über das Kommunikationsnetzwerk 14 bereit. Das Steuermodul 18 dient der umfassenden Steuerung der erfindungsgemäßen Abläufe, und das Datenzugriffsmodul 20 stellt die Schnittstelle zu den beiden Datenbanken 22, 24 dar. Die Profildatenbank 22 enthält umfangreiche Informationen über jeden registrierten Benutzer, während die Präsentationsdatenbank 24 die anzuzeigenden Präsentationsdaten bereitstellt.

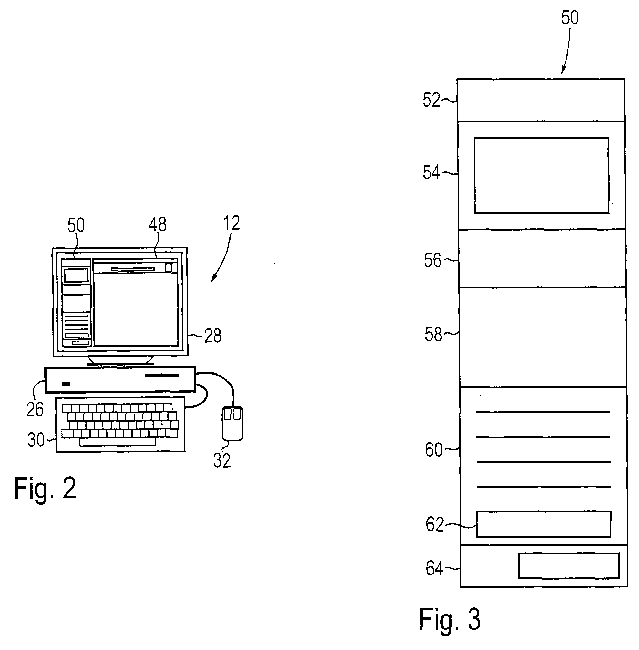

Der Benutzerrechner 12 kann als üblicher persönlicher Computer ausgestaltet sein und beispielsweise, wie in Fig. 2 dargestellt, eine Haupteinheit 26, einen Bildschirm 28, eine Tastatur 30 und eine Maus 32 aufweisen. Ebenso wie für den Server 10 stellt Fig. 1 lediglich eine konzeptuelle Sicht auf mehrere für die Erfindung relevante Module des Benutzerrechners 12 dar. Diese Module sind ein Kommunikationsmodul 34, ein Browser 36, eine Benutzeranwendung 38 und eine Präsentationsdatei 40.

Der Browser 36 kann ein üblicher Internet-Browser sein, wie er beispielsweise unter den Marken Netscape Navigator oder Microsoft Internet Explorer bekannt ist. Die Benutzeranwendung 38 ist ein speziell programmiertes Anwenderprogramm, das seinerseits ein Steuermodul 42, ein Wiedergabemodul 44 und ein Datenzugriffsmodul 46 aufweist. Der Browser 36 und die Benutzeranwendung 38 stehen untereinander sowie mit dem Kommunikationsmodul 34 in Verbindung, und das Datenzugriffsmodul 46 vermag (über geeignete Betriebssystemdienste) auf die Präsentationsdatei 40 zuzugreifen.

Das Kommunikationsmodul 34 des Benutzerrechners 12 stellt die für den Zugriff auf das Kommunikationsnetzwerk 14 benötigten Dienste bereit. Für das Beispiel eines Internet-Zugangs kann das Kommunikationsmodul 34 z.B. dazu eingerichtet sein, eine Einwahlverbindung mit einem Einwahlknoten des Kommunikationsnetzwerks 14 über das PPP-Protokoll aufzubauen und dann eine Datenkommunikation über Dienste des TCP/IP-Protokolls zu ermöglichen. Das Kommunikationsmodul 34 besteht in unterschiedlichen Ausführungsvarianten der Erfindung entweder ganz aus Standardmodulen des Betriebssystems, oder es ist ein vollständig vom Dienstanbieter erstelltes Programm, oder es besteht teils aus Standardkomponenten und teils aus modifizierten Komponenten des Dienstanbieters.

Das Steuermodul 42 ist das eigentliche Kernstück der Benutzeranwendung 38. Die erfindungsgemäße Funktionalität und insbesondere die diversen Überwachungs-, Prüf- und Kontrollfunktionen werden durch das Steuermodul 42 implementiert. Das Wiedergabemodul 44 dient der multimedialen Wiedergabe der anzuzeigenden Präsentationsdaten. Das Datenzugriffsmodul 46 verwaltet die Präsentationsdatei 40, in der die Präsentationsdaten lokal (zwischen-)gespeichert werden.

Damit der Benutzer die erfindungsgemäße Funktionalität nutzen kann, ist zunächst eine Anmeldung bei einem Dienstanbieter erforderlich. Die Anmeldung kann telefonisch, elektronisch oder schriftlich erfolgen. Bei dieser Anmeldung gibt der Benutzer eine Reihe persönlicher Daten an, aus denen ein in der Profildatenbank 22 abgelegtes Benutzerprofil erstellt wird. Akzeptiert der Dienstanbieter die Anmeldung, so wird dem Benutzer die Benutzeranwendung 38 zugänglich gemacht (z.B. als CD-ROM zugeschickt oder zum Herunterladen freigegeben), und ein Benutzername sowie ein Kennwort werden vergeben.

Der Benutzer installiert daraufhin die Benutzeranwendung 38 auf dem Benutzerrechner 12. Da die Benutzeranwendung 38 zur Zusammenarbeit mit jedem gängigen Browser 36 eingerichtet ist, wird im Regelfall bereits ein geeigneter Browser 36 auf dem Benutzerrechner vorhanden sein.

Nach diesen vorbereitenden Schritten hat der Benutzer Zugriff auf die erfindungsgemäße Funktionalität. Während des Betriebs wird auf dem Bildschirm 28 des Benutzerrechners 12 das übliche, an sich bekannte Browserfenster 48 des Browsers 36 gezeigt, wie dies in Fig. 2 angedeutet ist. Neben diesem Browserfenster 48 zeigt die gleichzeitig mit dem Browser 36 laufende Benutzeranwendung 38 ein Portalfenster 50 an. Das Portalfenster 50 befindet sich stets im Vordergrund. Es kann nicht minimiert oder geschlossen werden und in seiner Größe nicht verändert (bzw. zumindest nicht unter eine vorgegebene Mindestgröße verkleinert) werden. Im hier beschriebenen Ausführungsbeispiel weist das Portalfenster 50 diverse Bereiche auf, die in Fig. 3 schematisch dargestellt sind.

Ein Branding-Bereich 52 des Portalfensters 50 dient zum Anzeigen des Logos des Dienstanbieters oder eines anderen Sponsors. Es kann vorgesehen sein, außer dem eigentlichen Branding-Bereich 52 auch andere Eigenschaften des Portalfensters 50 (z.B. die Farbgebung) dem gewünschten Branding anzupassen. Diejenigen Blöcke der Präsentationsdaten, die als Videoclips vorliegen, werden von dem Wiedergabemodul 44 in einem Videobereich 54 dargestellt. Dieser Videobereich 54 wird gegenwärtig als besonders bedeutsam angesehen, weil das Anzeigen von Filmen und bewegten Bildern besonders hohe Aufmerksamkeitswerte beim Benutzer erzielt. Für die Präsentation von statischen Werbegrafiken und einfachen Animationen ist ein Banner-Bereich 56 vorgesehen.

Ein Webseiten-Bereich 58 dient, vergleichbar mit einem sehr kleinen BrowserFenster, zur Anzeige beliebiger in einer Seitenbeschreibungssprache abgefaßten Dokumente. Die angezeigten Dokumente können in unterschiedlichen Ausführungsvarianten wahlweise von der Präsentationsdatenbank 24 des Servers 10 oder von einem externen Server (beispielsweise einem Server des Werbekunden, dessen Videopräsentation gerade im Videobereich 54 angezeigt wird) oder von einem durch den Benutzer ausgewählten Server stammen.

Ein Portalbereich 60 weist mehrere Hypertext-Verknüpfungen ("links") auf, die teils durch die Werbeerfordernisse vorgegeben sind und teils den Präferenzen des Benutzers (gespeichert in der Profildatenbank 22) entsprechen. Der Portalbereich 60 kann wahlweise ein Teil des Webseiten-Bereichs 58 oder ein separater Bereich sein. In dem Portalbereich 60 ist ein Suchfenster 62 angeordnet, in das der Benutzer Suchbegriffe eingeben kann. Die Suchergebnisse werden wahlweise im Webseiten-Bereich 58 angezeigt oder an den Browser 36 übermittelt und im Browserfenster 48 wiedergegeben.

In dem Kontoanzeigebereich 64 wird der aktuelle Kontostand des Benutzers angezeigt. Überdies weist der Kontoanzeigebereich 64 einen Indikator auf, der angibt, ob momentan eine virtuelle Benutzersitzung aktiv ist oder nicht. Eine aktive virtuelle Benutzersitzung kann wahlweise mit einem kostenlosen Internet-zugang oder mit einer Vergütung auf dem Konto des Benutzers verbunden sein.

Die Benutzeranwendung 38 zeigt während der Programmausführung in dem Portalfenster 50 die Präsentationsdaten an. Insbesondere betrifft dies die Anzeige von Videoclips oder Videofilmen in dem Videobereich 54 und die Anzeige von Werbebannern in dem Banner-Bereich 56. Zumindest dann, wenn eine virtuelle Benutzersitzung aktiv ist, kann der Benutzer den Browser 36 uneingeschränkt nutzen. Während der Inhalt des Browserfensters 48 und des Portalfensters 50 im wesentlichen unabhängig voneinander sind, besteht in gewissem Umfang die Möglichkeit, die vom Browser 36 angezeigte Seite über die Benutzeranwendung 38 zu steuern. Insbesondere kann vorgesehen sein, daß ein Mausklick des Benutzers auf eine im Portalfenster 50 angezeigte Verknüpfung zu einem Aufruf der entsprechenden Internetseite im Browserfenster 48 führt. Hierbei enthält der gesamte Videobereich 54 eine Verknüpfung zu dem Hersteller des jeweils im Videobereich 54 beworbenen Produkts. Entsprechendes gilt für den Banner-Bereich 56.

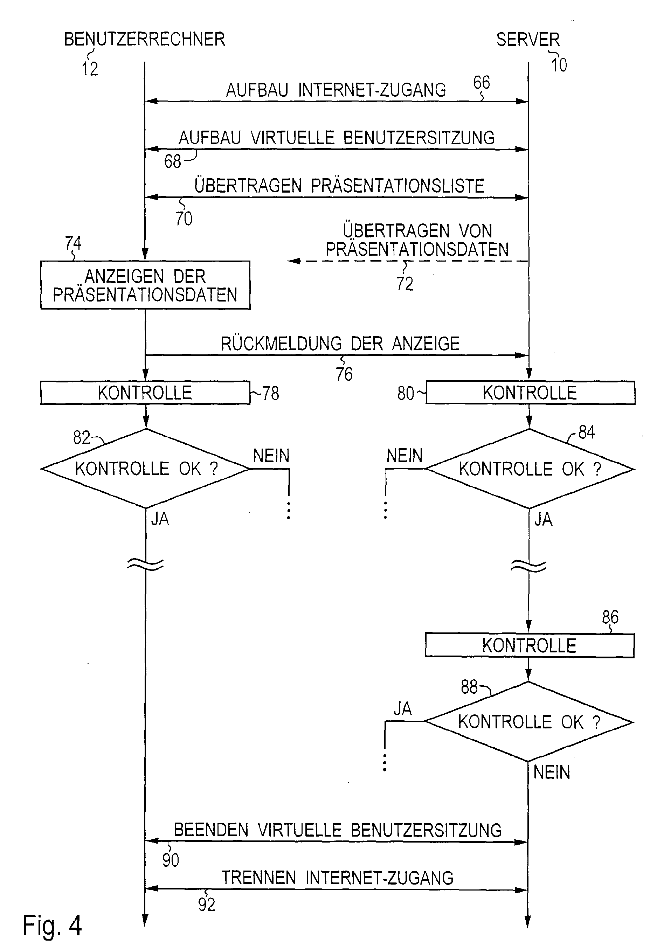

Die im vorliegenden Beispiel ausgeführten Verarbeitungs- und Kommunikationsvorgänge sind in Fig. 4 in einer abstrahierenden Übersicht veranschaulicht. Der dargestellte Ablauf beginnt in Schritt 66 mit dem Aufbau eines Internet-Zugangs für den Benutzerrechner 12. In dem hier beschriebenen Ausführungsbeispiel wird dieser Zugang über einen Einwahlknoten desjenigen Dienstanbieters bereitgestellt, der auch den Server 10 betreibt. In Ausführungsalternativen kann dagegen ein Internet-Zugang eines beliebigen Dienstanbieters verwendet werden.

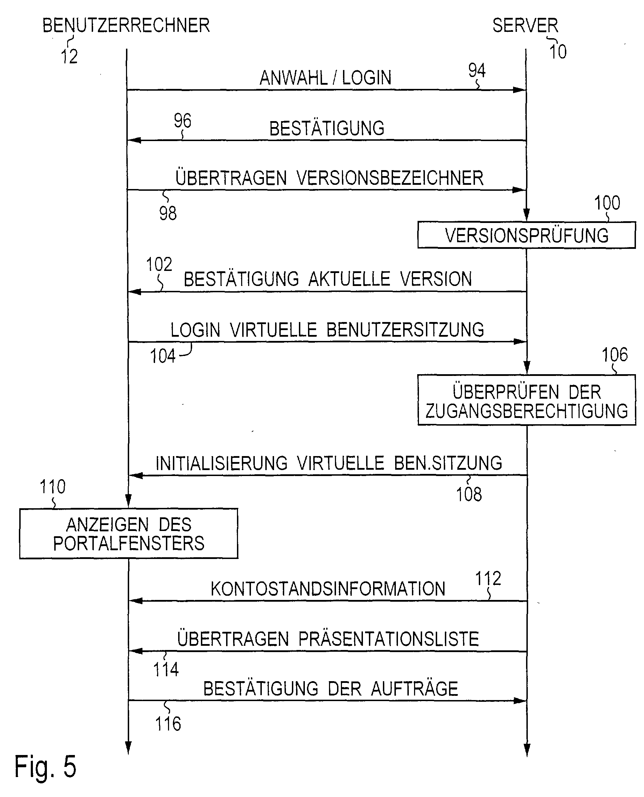

Es wird nun in Schritt 68 die virtuelle Benutzersitzung zwischen dem Benutzerrechner 12 und dem Server 10 aufgebaut. Die damit im Detail verbundenen Verfahrensschritte werden unten noch unter Hinweis auf Fig. 5 genauer beschrieben werden. Im Zusammenhang mit der abstrahierenden Darstellung von Fig. 4 ist nur von Bedeutung, daß in Schritt 70 eine Liste der anzuzeigenden Präsentationsdaten von dem Server 10 an den Benutzerrechner 12 übertragen wird. Diese Liste wird vom Server 10 in Abhängigkeit von dem in der Profildatenbank 22 gespeicherten Benutzerprofil sowie in Abhängigkeit von den vorliegenden Aufträgen für Werbeeinblendungen zusammengestellt.

Nach Abschluß von Schritt 70 steht dem Benutzer die volle Funktionalität des Internet-Zugangs über den Browser 36 zur Verfügung. Das Steuermodul 42 stellt laufend fest, inwieweit die Übertragungskapazität des Internet-Zugangs (die normalerweise durch die Übertragungsleistung der Einwahlverbindung des Benutzerrechners 12 limitiert ist) vom Benutzer ausgeschöpft wird. Falls freie Übertragungskapazitäten vorhanden sind, werden in Schritt 72 weitere Präsentationsdaten, die aus der Präsentationsdatenbank 24 stammen, vom Server 10 zum Benutzerrechner 12 übertragen und dort vom Datenzugriffsmodul 46 der Benutzeranwendung 38 in der Präsentationsdatei 40 abgelegt. Ein derartiger Lade- oder Nachladevorgang von Präsentationsdaten kann alternativ auch durch den Server 10 angestoßen werden, und er kann im Bedarfsfall auch mit einer höheren Priorität als die Datenübertragung zum Browser 36 ausgeführt werden. In der Regel ist es jedoch wünschenswert, die Surfaktivitäten des Benutzers am Browser 36 durch das Laden von Präsentationsdaten möglichst wenig zu beeinträchtigen.

Parallel zu der Surfmöglichkeit für den Benutzer mittels des Browsers 36 wird in Schritt 74 ein erster Block der Präsentationsdaten im Portalfenster 50 angezeigt. Dieser erste Block kann insbesondere ein Videoclip sein, der vom Wiedergabemodul 44 dekodiert und im Videobereich 54 dargestellt wird. Die angezeigten Präsentationsdaten stammen in der Regel aus der Präsentationsdatei 40 und werden durch das Datenzugriffsmodul 46 dem Wiedergabemodul 44 bereitgestellt. Diese Präsentationsdaten können bereits in einer vorhergehenden Benutzersitzung oder sogar schon bei der Installation der Benutzeranwendung 38 in der Präsentationsdatei 40 abgelegt worden sein. Mit zunehmender Dauer der Benutzersitzung werden dagegen in der Regel immer mehr Präsentationsdaten angezeigt werden, die erst im Verlauf der Benutzersitzung zum Benutzerrechner 12 übertragen und in der Präsentationsdatei 40 abgelegt worden sind.

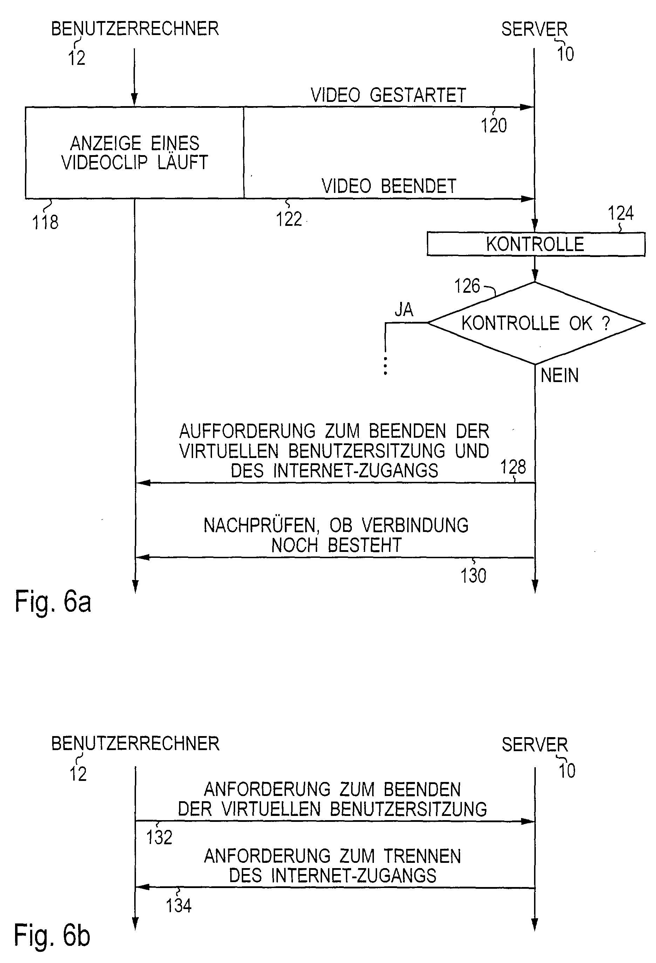

In Zusammenhang mit dem Anzeigen des ersten Präsentationsdatenblocks in Schritt 74 erfolgt in Schritt 76 eine Rückmeldung über die Anzeige an den Server 10. In einfachen Ausgestaltungen kann lediglich eine einzige Rückmeldung für jeden Präsentationsdatenblock vorgesehen sein, die nach dem Anzeigevorgang abgeschickt wird und das korrekte Beenden dieses Vorgangs angibt. Im hier beschriebenen Ausführungsbeispiel ist jedoch vorgesehen, daß sowohl am Beginn als auch am Ende der Anzeige jedes Videoclips eine entsprechende Rückmeldenachricht abgesandt wird, wie dies noch unter Hinweis auf Fig. 6a genauer erläutert werden wird.

Nach den Schritten 74 und 76 erfolgt im hier beschriebenen Ausführungsbeispiel sowohl durch den Benutzerrechner 12 als auch durch den Server 10 eine Kontrolle der korrekten Anzeige der Präsentationsdaten. Genauer gesagt, wird durch das Steuermodul 42 des Benutzerrechners 12 in Schritt 78 überprüft, inwieweit das Abspielen des Videoclips mit den in der Präsentationsliste vorhandenen Daten und mit Informationen, die in den Präsentationsdaten selber enthalten sind, übereinstimmt. Insbesondere wird in diesem Zusammenhang überprüft, ob die tatsächliche Abspieldauer des Videoclips hinreichend mit der vorgesehenen Dauer übereinstimmt. Durch diese Maßnahme wird eine Manipulation der Präsentationsdatei 40 wirksam verhindert.

Die Kontrolle auf Seiten des Servers 10 in Schritt 80 beruht auf einem Vergleich der in Schritt 76 rückgemeldeten Daten mit den Informationen, die dem Server 10 aus der Profildatenbank 22 und der Präsentationsliste vorliegen. Wenn beispielsweise in den Rückmeldedaten Angaben über Titel, Kategorie und Spieldauer des Videoclips enthalten sind, wird in Schritt 80 durch das Steuermodul 18 des Servers 10 überprüft, ob diese Daten in Kombination mit dem angemeldeten Benutzer zulässig sind. Im vorliegenden Beispielablauf wird angenommen, daß beide Kontrollen in den Schritten 78 und 80 ein zulässiges Ergebnis liefern, also bestätigen, daß der erste Videoclip entsprechend der Präsentationsliste tatsächlich im Videobereich 54 angezeigt wurde. Es werden daher in den Abfragen 82 und 84 auf beiden Seiten die jeweiligen "ja"-Zweige gewählt, so daß die Benutzersitzung fortgesetzt werden kann. Während der Benutzer weiter Zugriff auf das Internet erhält, werden parallel die bereits beschriebenen Schritte 72 bis 84 wiederholt, bis der Benutzer oder der Dienstanbieter den Ablauf beendet oder eine der Kontrollen fehlschlägt.

Eine solche fehlgeschlagene Kontrolle ist in Fig. 4 beispielhaft mit dem Bezugszeichen 86 beim Server 10 gezeigt. Das Fehlschlagen hat zur Folge, daß der "nein"-Zweig in Abfrage 88 gewählt wird, was seinerseits das Beenden der virtuellen Benutzersitzung in Schritt 90 auslöst. Als Konsequenz dieses Beendens der virtuellen Sitzung wird im hier beschriebenen Ausführungsbeispiel auch der Internet-Zugang 92 des Benutzers getrennt. In Ausführungsalternativen, bei denen der Internet-Zugang über einen externen Dienstanbieter bereitgestellt wird, kann statt einer Trennung des Zugangs die Vergütungszahlung eingestellt werden. Das Ende der Benutzersitzung wird im Kontoanzeigebereich 64 signalisiert.

Ebenso wie durch eine fehlgeschlagene serverseitige Kontrolle ist auch ein Beenden der Benutzersitzung und des Internet-Zugangs vorgesehen, wenn eine vom Benutzerrechner 12 durchgeführte Kontrolle eine Fehlfunktion oder einen Manipulationsversuch anzeigt. Die Schritte 90 und 92 werden in diesem Fall wie gerade beschrieben ausgeführt.

Die bereits grob durch die Schritte 66, 68, 70 charakterisierten Vorgänge sind in Fig. 5 detaillierter dargestellt. Der Aufbau des Internet-Zugangs (Schritt 66 in Fig. 4) beginnt mit der vom Benutzerrechner 12 ausgehenden Telefon-Anwahl eines Einwählknotens und der darauf folgenden Login-Prozedur (Schritt 94). Da bei dem beispielhaften Vorgang von Fig. 5 ein Einwählknoten desjenigen Dienstanbieters benutzt wird, der auch den Server 10 bereitstellt, gibt der Benutzer in Schritt 94 bereits den ihm bei der Anmeldung zugeteilten Benutzernamen sowie das Kennwort an. Der erfolgreiche Aufbau des Internet-Zugangs ("physikalische Sitzung") wird in Schritt 96 bestätigt.

In Ausführungsalternativen kann, wie bereits erwähnt, die physikalische Sitzung mit einem anderen Dienstanbieter (also einem, der nicht den Server 10 betreibt) aufgebaut werden. In diesem Fall erfolgen die Kommunikationsschritte 94 und 96 zwischen dem Benutzerrechner 12 und einem Einwahlknoten dieses anderen Dienstanbieters. Der Benutzer greift dann, z.B. durch Eingabe der Internet-Adresse (URL) des Servers 10, auf den hier beschriebenen Dienst zu und wählt eine entsprechende Schaltfläche, um den Aufbau der virtuellen Benutzersitzung zu initiieren.

Der in Fig. 4 mit Bezugszeichen 68 zusammengefaßte Aufbau der virtuellen Benutzersitzung umfaßt in Fig. 5 die Schritte 98 bis 112. Zunächst wird in Schritt 98 ein Bezeichner der jeweiligen Version der auf dem Benutzerrechner 12 installierten Benutzersoftware (Benutzeranwendung 38 und Kommunikationsmodul 34) an den Server 10 übertragen. In Schritt 100 überprüft das Steuermodul 18 des Servers 10, ob diese Version noch aktuell ist. Ist die Version veraltet, wird automatisch ein Aktualisierungsvorgang eingeleitet, und eine aktuelle Fassung der auf dem Benutzerrechner 12 laufenden Software (bzw. einzelner Module) wird an den Benutzerrechner 12 übertragen. Die häufige Aktualisierung der Benutzersoftware und die damit verbundene automatische Übertragung neuer Programmteile in den Benutzerrechner 12 ist ein wichtiger Beitrag zur Manipulationssicherheit, weil gegebenenfalls veränderte Teile der Benutzersoftware durch diese Maßnahme automatisch überschrieben werden.

In dem Beispielsablauf von Fig. 5 wird angenommen, daß in Schritt 100 eine aktuelle Version der Benutzersoftware festgestellt wurde. Es wird daher in Schritt 102 an den Benutzerrechner gemeldet, daß keine Aktualisierung erforderlich ist. In Schritt 104 beginnt nun der Login-Vorgang für die virtuelle Sitzung. Falls dies noch nicht in Zusammenhang mit der Internet-Einwahl in Schritt 94 erfolgt ist, werden mit der Login-Anforderung in Schritt 104 der Benutzername und das Kennwort an den Server 10 übertragen.

Serverseitig wird nun in Schritt 106 die Zugangsberechtigung des Benutzers für die virtuelle Sitzung überprüft. Falls der Zugang gewährt wird, wird die virtuelle Sitzung in Schritt 108 initialisiert. Dazu überträgt der Server 10 aus der Profildatenbank 22 benutzerspezifische Elemente an die Benutzeranwendung 38. Solche benutzerspezifische Elemente sind insbesondere vom Benutzer eingestellte Eigenschaften des Portalfensters 50 und vom Benutzer zusammengestellte Hypertext-Verknüpfungen, die (zusammen mit fest vorgegebenen oder temporär durch den Dienstanbieter gewählten Verknüpfungen) im Portalbereich 60 des Portalfensters 50 angezeigt werden sollen.

Serverseitig beginnt mit Schritt 108 ferner die Registrierung der Online-Zeit des Benutzers und eine Aufzeichnung und Auswertung der nun folgenden Benutzeraktionen, um die Profileinträge in der Profildatenbank 22 ständig zu aktualisieren. Diese Aufzeichnung und Auswertung muß natürlich mit den jeweils gültigen Datenschutzbestimmungen in Einklang stehen. Clientseitig wird nach Empfang der vom Server 10 in Schritt 108 gesendeten Initialisierungsdaten in Schritt 110 das Portalfenster 50 mit den benutzerspezifisch aufbereiteten Elementen angezeigt.

Unmittelbar nach dem Start der Zeitregistrierung überträgt der Server 10 in Schritt 112 aktuelle Kontostandsinformationen an den Benutzerrechner 12. Nach Erhalt dieser Kontostandsinformationen wird auch auf Seiten des Benutzerrechners 12 die Registrierung der Online-Zeit gestartet, und der jeweils aktuelle Kontostand wird im Kontoanzeigebereich 64 dargestellt.

Als nächster Vorgang wird in Schritt 114 (entsprechend Schritt 70 in Fig. 4) die für den Benutzer in Abhängigkeit von seinem Benutzerprofil zusammengestellte Präsentationsliste übertragen. Diese Präsentationsliste enthält gleichsam eine "Regieanweisung" für diejenigen Präsentationsdaten, die dem Benutzer während seiner Surfzeit angezeigt werden sollen. Die Auswahl erfolgt durch den Server 10 in Abhängigkeit von den im Benutzerprofil 22 angegebenen Zielgruppeneigenschaften des Benutzers und in Abhängigkeit von den beim Dienstanbieter vorliegenden Werbeaufträgen. Der korrekte Erhalt der Präsentationsliste wird vom Benutzerrechner 12 in Schritt 116 bestätigt.

Mit Schritt 116 ist der Aufbau der virtuellen Benutzersitzung zwischen dem Benutzerrechner 12 und dem Server 10 abgeschlossen. Von diesem Zeitpunkt an steht dem Benutzer im hier dargestellten Beispielsablauf der volle Internetzugriff über seinen Browser 36 zur Verfügung, während vorher nur ein eingeschränkter Intranetzugang bestand. Bei der hier beschriebenen Anwahl über einen Zugangsknoten des Dienstanbieters ist ein völlig kostenloser (also auch telefongebührenfreier) Internetzugang vorgesehen. Dies wird im Kontoanzeigebereich 64 durch ein geeignetes Symbol dargestellt, während der eigentliche Kontostand gleichbleibt. Bei der Einwahl über einen externen Dienstanbieter ist eine Vergütungszahlung vorgesehen; hier erhöht sich also der Kontostand des Benutzers. In Ausführungsvarianten kann auch im erstgenannten Fall entweder eine Vergütung erfolgen oder eine (geringe) Kostenbeteiligung des Benutzers gefordert werden.

Wie schon im Zusammenhang mit Fig. 4 beschrieben, werden dem Benutzer während des Bestehens der virtuellen Sitzung laufend die in der Präsentationsliste referenzierten Präsentationsdaten angezeigt. Für jede Anzeige eines Präsentationsdatenblocks (Schritt 74 in Fig. 4) erfolgt mindestens eine geeignete Rückmeldung (Schritt 76 in Fig. 4). Im Zusammenhang mit der Anzeige eines Videoclips sind sogar zwei Rückmeldungen in Echtzeit vorgesehen, wie dies in Fig. 6a schematisch dargestellt ist. Sobald die Videoanzeige im Videobereich 54 gestartet worden ist (Beginn von Schritt 118), wird in Schritt 120 eine erste Rückmeldung an den Server 10 gesendet, und sobald der Videoclip beendet ist, wird dies dem Server 10 in einer zweiten Meldung (Schritt 122) mitgeteilt.

Die beiden in Schritt 120 und 122 gesendeten Meldungen enthalten ferner Informationen über die aktuelle Rechneruhrzeit, den Titel, die vorgesehene Länge und die Kategorie des Videoclips. Bei der serverseitigen Kontrolle in Schritt 124 (entsprechend Schritt 80 in Fig. 4) werden nicht nur diese Informationen mit der aktuellen Präsentationsliste verglichen, sondern es wird auch überprüft, ob der Zeitabstand der beiden Rückmeldungen 120, 122 mit den darin enthaltenen Angaben (und insbesondere der Länge des abgespielten Videoclips) übereinstimmt. Ein Abweichen über einen vorgegebenen Toleranzbereich hinaus wird in Abfrage 126 (entsprechend Abfrage 88 in Fig. 4) festgestellt.

Bei einer derartigen Abweichung, die im Beispielsablauf von Fig. 6a angenommen werden soll, wird die laufende Benutzersitzung möglichst "gutartig" getrennt, um somit der Benutzeranwendung 38 die Möglichkeit zur Datensicherung und zu sonstigen Verwaltungsvorgängen zu geben. Dazu wird in Schritt 128 eine entsprechende Aufforderung an die Benutzeranwendung 38 und das Kommunikationsmodul 34 geschickt. Die erwartete Reaktion ist, daß der Benutzerrechner 12 sich aus der virtuellen Sitzung ausbucht (Schritt 90 in Fig. 4) und danach von sich aus den Internet-Zugang schließt (Schritt 92 in Fig. 4). Um auch in diesem Zusammenhang Manipulationen möglichst zu erschweren, überprüft der Server 10 in Schritt 130 nach einiger Zeit, ob der Benutzerrechner 12 noch ansprechbar ist. Ist dies der Fall, dann wird der Internet-Zugang durch den Server 10 (bzw. den damit verbundenen Einwahlknoten) unterbrochen.

Fig. 6b zeigt einen beispielhaften Ablauf, der ausgeführt wird, wenn der Benutzer von sich aus die virtuelle Sitzung beenden möchte oder wenn eine vorgegebene Maximaldauer für die virtuelle Benutzersitzung überschritten wird. In diesem Fall sendet der Benutzerrechner 12 eine Anforderung zum Beenden der virtuellen Sitzung an den Server 10 (Schritt 132). Der Server 10 führt diese Anforderung aus und antwortet in Schritt 134 mit einer Anforderung zum Trennen des Internet-Zugangs, die wie oben beschrieben bearbeitet wird.

Eine weitere im hier beschriebenen Ausführungsbeispiel eingesetzte Maßnahme zur Erhöhung der Manipulationssicherheit ist die gegenseitige Authentifizierung (Echtheitsprüfung) von Benutzerrechner 12 und Server 10 durch ein Frage- und Antwortspiel. Dieser Austausch wird sowohl durch den Benutzerrechner 12 als auch durch den Server 10 in unregelmäßigen Zeitabständen angestoßen.

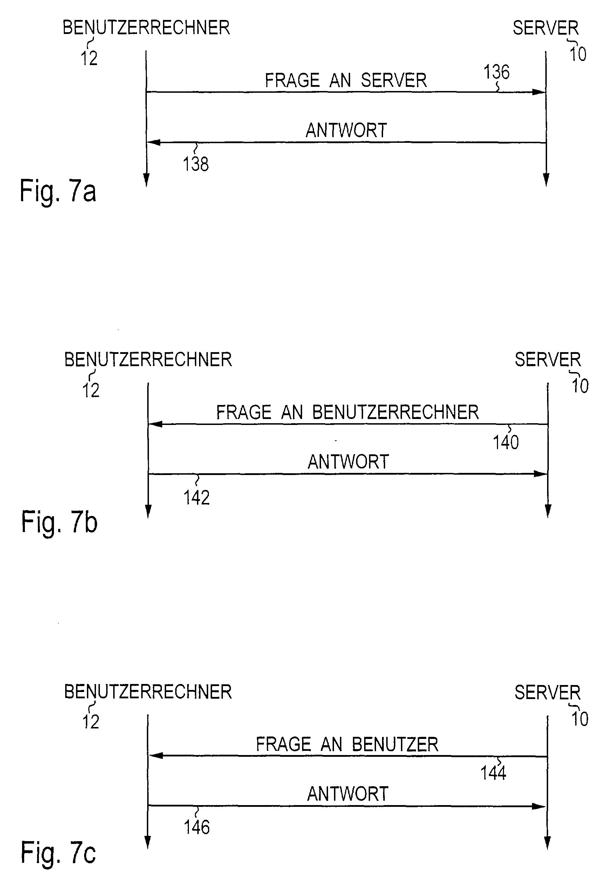

Beispielsweise stellt in Fig. 7a der Benutzerrechner 12 in Schritt 136 eine Frage, die vom Server 10 innerhalb einer vorgegebenen Zeit (beispielsweise zwei Sekunden) beantwortet werden muß (Schritt 138). Zur Beantwortung der Frage ist ein Zugriff auf Informationen erforderlich, die sowohl dem Server 10 als auch dem Benutzerrechner 12 vorliegen ("shared secret"). Diese Informationen können beispielsweise Teile des jeweils vom Server 10 bzw. dem Benutzerrechner 12 ausgeführten Programmcodes betreffen oder auch textuelle Informationen sein, die beiden Seiten vorliegen. Erfolgt innerhalb der vorgegebenen Zeit keine Antwort, oder wird eine falsche Antwort gegeben, so führt dies wiederum zum Abbruch der virtuellen Benutzersitzung und des Internet-Zugangs.

In Fig. 7b ist die entsprechende serverseitige Authentifizierung durch eine vom Server gestellte Frage (Schritt 140) gezeigt, die innerhalb einer Zeit von beispielsweise zwei Sekunden durch den Benutzerrechner 12 beantwortet werden muß (Schritt 142).

Vom reinen Verfahrensablauf identisch ist die Darstellung in Fig. 7c. Hier richtet sich die in Schritt 144 gestellte Frage des Servers 10 jedoch an den Benutzer. Die Frage wird im Portalfenster 50 auf dem Bildschirm 28 des Benutzerrechners 12 angezeigt, und eine Antwort des Benutzers wird innerhalb eines Zeitraums von beispielsweise dreißig Sekunden erwartet (Schritt 146). Die Frage kann wahlweise im Sinne einer Meinungsumfrage dazu dienen, eine Rückmeldung des Benutzers über einzelne Videoclips zu erhalten (z.B. "Wie hat Ihnen der letzte Videoclip gefallen?"), oder sie kann zur Erhöhung der Manipulationssicherheit dienen (z.B. "Welches Tier sehen Sie gerade im Videobereich?"). Insbesondere durch die letztgenannte Möglichkeit einer an den Benutzer gerichteten Frage kann zuverlässig festgestellt werden, ob ein (menschlicher) Benutzer die Werbeeinblendungen zu Gesicht bekommt.

Wie bereits erwähnt, wird im Zusammenhang mit dem Übertragen der Kontostandsinformationen (Schritt 112 in Fig. 5) sowohl server-, als auch clientseitig eine Registrierung der jeweils angefallenen Online-Zeit beziehungsweise des jeweils aktuellen Kontostands vorgenommen. Durch einen in unregelmäßigen Abständen ausgeführten Abgleich der jeweils aktuellen Zeit- bzw. Kontostandsinformationen kann auch in diesem Zusammenhang eine erhöhte Manipulationssicherheit geschaffen werden.

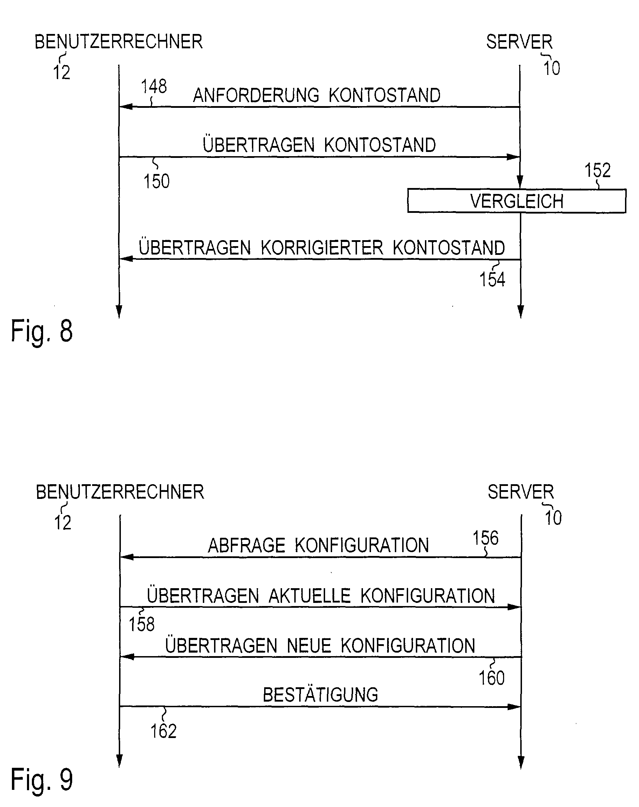

Fig. 8 zeigt beispielhaft den Ablauf einer Kontostandsabfrage. In Schritt 148 fordert der Server 10 den nach der Berechnung der Benutzeranwendung 38 aktuellen Kontostand an. Dieser Kontostand wird in Schritt 150 an den Server 10 zurückübertragen und dort in Schritt 152 mit dem aktuellen serverseitigen Kontostand verglichen. Ist die Abweichung zu groß, so wird ein Manipulationsversuch angenommen, und die virtuelle Benutzersitzung wird getrennt. Bei einer geringen Abweichung, die sich in einem vorgegebenen Toleranzbereich bewegt, wird die virtuelle Benutzersitzung fortgesetzt und lediglich der Kontostand des Benutzerrechners 12 in Schritt 154 korrigiert. Ein entsprechendes Verfahren kann auch zum Abgleich der beiderseitigen Online-Zeiterfassung verwendet werden.

Im hier beschriebenen Ausführungsbeispiel ist die Konfiguration der auf dem Benutzerrechner 12 installierten Programmodule (insbesondere des Kommunikationsmoduls 34 und der Benutzeranwendung 38) auf Anforderung des Servers 10 in weiten Grenzen veränderbar. Diese Möglichkeit erhöht erstens die Flexibilität des erfindungsgemäßen Systems und bietet zweitens erhöhten Manipulationsschutz dadurch, daß gängige Standardkomponenten, die bei einem Manipulationsversuch eingesetzt werden könnten, solche Konfigurationswechsel nicht oder nicht im erforderlichen Umfang unterstützen.

Der Konfigurationswechsel ist in Fig. 9 in einem beispielhaften Ablauf gezeigt. Der Vorgang startet in Schritt 156 mit einer Abfrage der aktuellen Konfigurationsdaten des Kommunikationsmoduls 34 und der Benutzeranwendung 38 durch den Server 10. Diese Konfigurationsdaten werden in Schritt 158 an den Server 10 geschickt. Der Server 10 kann nun in Schritt 160 eine neue, veränderte Konfiguration an den Benutzerrechner 12 schicken, worauf in Schritt 162 eine Bestätigung erfolgt. In Abhängigkeit vom Typ der Anforderung in Schritt 160 kann der Konfigurationswechsel dann bei der nächsten Einwahl oder sofort ausgeführt werden, und vorzugsweise ist vorgesehen, während jeder Benutzersitzung in unregelmäßigen Abständen (z.B. durchschnittlich alle zehn Minuten) einen Konfigurationswechsel durchzuführen.

Generell kann jeder technische Parameter Bestandteil der veränderbaren Konfigurationsdaten sein. So ist im vorliegenden Ausführungsbeispiel vorgesehen, das serverseitige Kommunikationsmodul 16 und das clientseitige Kommunikationsmodul 34 so auszugestalten, daß der aktuell verwendete Port des TCP/IP-Protokolls während des laufenden Internet-Zugangs verändert wird. Eine solche Änderung des Ports zur Laufzeit wird von üblichen Programmkomponenten nicht unterstützt, so daß die gegenseitige Kommunikation zwischen dem Server 10 und dem Benutzerrechner 12 nur unter Verwendung der speziellen, erfindungsgemäßen Komponenten möglich ist.

Weitere Varianten der erfindungsgemäßen Lösung sind für den Fachmann aus der obigen Detailbeschreibung offensichtlich. Die hier beschriebenen Ausführungsbeispiele sollen daher nur als Beispiele für erfindungsgemäße Systeme angesehen werden und nicht zu einer Einschränkung des beanspruchten Schutzbereichs herangezogen werden.

## Patentansprüche

1. Verfahren zum Bereitstellen einer virtuellen Benutzersitzung zwischen einem Server (10) und einem Benutzerrechner (12) über ein Kommunikationsnetzwerk (14), mit den Schritten:
- Aufbau (68; 98-112) der Benutzersitzung,
- Übertragen (72) von Präsentationsdaten an den Benutzerrechner (12),
- Anzeigen (74; 118) der Präsentationsdaten durch den Benutzerrechner (12),
- manipulationsgeschützte Kontrolle (78-84; 124-126), ob die Anzeige (74; 118) der Präsentationsdaten durch den Benutzerrechner (12) stattgefunden hat, und
- Beenden (90; 128-130; 132) der Benutzersitzung, falls bei der Kontrolle (78-84; 124-126) festgestellt wurde, daß eine Manipulation erfolgt ist oder daß die Anzeige (74; 118) der Präsentationsdaten durch den Benutzerrechner (12) nicht stattgefunden hat.

2. Verfahren nach Anspruch 1,
bei dem die manipulationsgeschützte Kontrolle (78-84; 124-126), ob die Anzeige der Präsentationsdaten durch den Benutzerrechner (12) stattgefunden hat, zumindest auch durch den Server (10) durchgeführt wird, und bei dem das Beenden (90; 128-130; 132) der Benutzersitzung zumindest auch durch den Server (10) auslösbar ist.

3. Verfahren nach Anspruch 1 oder Anspruch 2,
bei dem eine das Anzeigen der Präsentationsdaten betreffende Rückmeldung (76; 120-122) von dem Benutzerrechner (12) an den Server (10) erfolgt.

4. Verfahren nach einem der Ansprüche 1 bis 3,
bei dem die Präsentationsdaten Videoclips umfassen, die von dem Benutzerrechner (12) in einem Videobereich (54) angezeigt werden.

5. Verfahren nach den Ansprüchen 3 und 4,
bei dem sowohl der Beginn der Anzeige eines Videoclips (120) als auch das Ende der Anzeige des Videoclips (122) von dem Benutzerrechner (12) an den Server (10) rückgemeldet werden.

6. Verfahren nach Anspruch 4 oder Anspruch 5,
bei dem ferner eine Kontrolle des Bildschirminhalts im Videobereich (54) erfolgt, um festzustellen, ob die Präsentationsdaten durch den Benutzerrechner (12) angezeigt werden.

7. Verfahren nach einem der Ansprüche 1 bis 6,
bei dem ferner eine Kontrolle durch den Austausch einer Frage (136, 140, 144) und einer Antwort (138, 142, 146) zwischen dem Benutzerrechner (12) und dem Server (10) erfolgt.

8. Verfahren nach einem der Ansprüche 1 bis 7,
bei dem ferner eine Kontrolle dadurch erfolgt, daß Zeit- und/oder Kontostandsdaten sowohl von dem Benutzerrechner (12) als auch von dem Server (10) berechnet werden, und daß die berechneten Zeit- und/oder Kontostandsdaten zwischen dem Benutzerrechner (12) und dem Server (10) verglichen (148-152) werden.

9. Verfahren nach einem der Ansprüche 1 bis 8,
bei dem ferner die Konfiguration des Benutzerrechners (12) durch eine Anforderung des Servers (10) veränderbar ist (156-162).

10. Verfahren nach einem der Ansprüche 1 bis 9,
bei dem die Schritte des Anzeigens (74; 118) der Präsentationsdaten und der Kontrolle (78-84; 124-126) wiederholt ausgeführt werden.

11. Verfahren nach einem der Ansprüche 1 bis 10,
mit dem vorbereitenden Schritt des Aufbaus (66; 94-96) eines Zugangs zu dem Kommunikationsnetzwerk (14) für den Benutzerrechner (12), und mit dem Schritt, bei einem Beenden der Benutzersitzung (90; 128; 132) auch den Internet-Zugang für den Benutzerrechner (12) zu beenden (92; 128-130; 134).

12. Verfahren nach einem der Ansprüche 1 bis 11,
bei dem zumindest während der Benutzersitzung ein Zugang zu dem Kommunikationsnetzwerk (14) über einen vom Benutzerrechner (12) ausgeführten Browser (36) bereitgestellt wird.

13. Verfahren nach Anspruch 12,
bei dem die Präsentationsdaten von dem Server (10) an den Benutzerrechner (12) im wesentlichen dann übertragen werden (72), wenn die Auslastung des Zugangs zu dem Kommunikationsnetzwerk (14) durch den Browser (36) einen vorgegebenen Schwellwert unterschreitet.

14. Verfahren nach einem der Ansprüche 1 bis 13,
bei dem von dem Server (10) an den Benutzerrechner (12) übertragene Präsentationsdaten in einer Präsentationsdatei (40) des Benutzerrechners (12) gespeichert werden.

15. Vorrichtung mit einem Server (10), der dazu eingerichtet ist, eine virtuelle Benutzersitzung über ein Kommunikationsnetzwerk (14) zwischen dem Server (10) und einem an das Kommunikationsnetzwerk (14) angeschlossenen Benutzerrechner (12) nach einem Verfahren gemäß einem der Ansprüche 1 bis 14 bereitzustellen.

16. Computerprogrammprodukt zum Bereitstellen einer virtuellen Benutzersitzung zwischen einem Server (10) und einem Benutzerrechner (12) über ein Kommunikationsnetzwerk (14), bei dem das Computerprogrammprodukt Befehle aufweist, die den Server (10) und den Benutzerrechner (12) zum Ausführen eines Verfahrens nach einem der Ansprüche 1 bis 14 veranlassen.
